# EUROPEAN PATENT APPLICATION

(11) **EP 1 601 165 A1**
(43) Date of publication of application: **30.11.2005**
(21) Application number: 04012748.2
(22) Date of filing: 28.05.2004
(51) Int. Cl.: H04M 1/02, G06F 1/16, G01D 5/165

(54) **A foldable electronic device**

(71) Applicant: Sony Ericsson Mobile Communications AB, 221 88 Lund (SE)
(72) Inventor: Simonsson, Olof, 217 45 Malmö (SE); Schack, Göran, 296 33 Ahus (SE); Fagrenius, Gustav, 240 10 Dalby (SE)
(74) Representative: Körber, Martin Hans

(57) **Abstract**

The present invention provides a foldable electronic device having a new control element with which a plurality of functions of the device are controllable by varying the aperture angle (α) of the foldable electronic device. The electronic device comprises a first part (1) and a second part (2) connected to each other and foldable onto each other by a hinge (3), a means (9) for detecting the aperture angle (α) between the first part and second part, wherein the detecting means (9) provides an electrical signal according to the aperture angle (α) and a control means (10) controls functions of the electronic device based on the aperture angle signal.

## Description

The present invention relates to a foldable electronic device, in particular to a foldable electronic device having a portable shape such as mobile phones, palm-tops, portable video game devices, compact type computers, personal digital assistants (PDA), etc. The present invention further relates to a hinge for foldable electronic devices.

### DESCRIPTION OF RELATED ART

Portable electronic devices nowadays have to fulfil several contradictory requirements, e.g. they should be small and nevertheless manageable well because it is important for many customers to have a small device with easy to access functionabilities. The most suitable candidate in this context is a foldable electronic device (folder-type terminal). The foldable electronic device is a device comprising a first part and a second part, wherein the first part and the second part are connected to each other via a hinge and whereby the first and the second part can be folded or twisted together on top of each other so that the size of the device is significantly reduced while the device is carried around. In this closed state, the sensitive elements like keyboard and/or display are located typically on the protected inner side and, for using the device, the first part and the second part are fold back, twisted or flipped open.

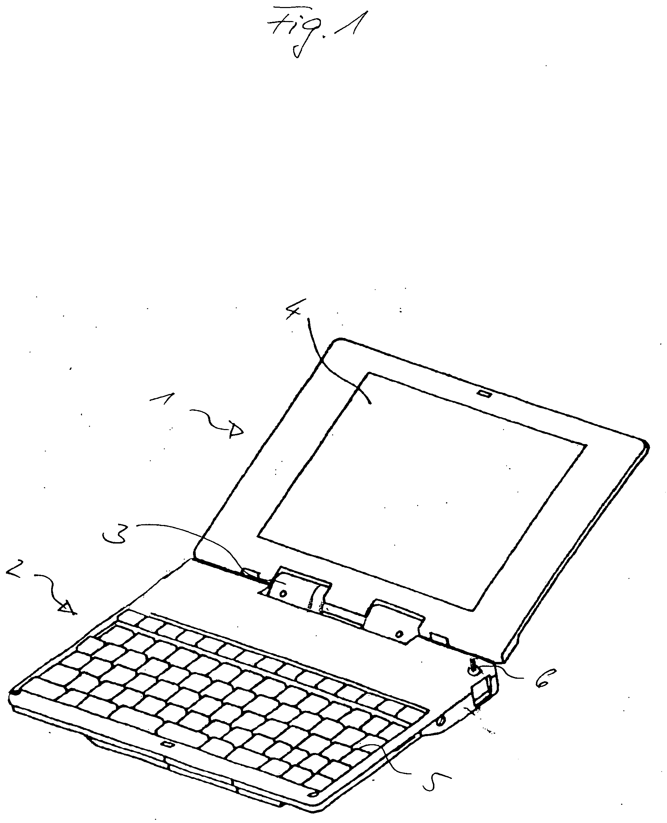

In general, if the foldable device, e.g. a lap-top computer or clamshell-type mobile phone, is opened/closed, some functions such as the switching on/off of the display or accepting/ending a call are activated automatically to simplify the handling, wherein a mechanical or magnetic contact is pressed or activated if the device is opened or closed by the user. Fig. 1 shows this known function in the example of a lap-top computer. The lap-top computer shown in Fig. 1 consists of a first part 1 and a second part 2 connected to each other and foldable onto each other by a hinge 3. The first part 1 comprises a display 4 and the second part 2 comprises a keyboard 5. If the first part 1 and the second part 2 are folded together, a spring-biased pin 6 coupled to a switch (not shown) is pressed down by the first part 1, the switch is opened and the display 4 is switched off. In other words, the switch gives only two values, i.e., "0" for closed and "1" for all other positions.

### SUMMARY

It is an object of the present invention to provide a foldable electronic device which has an improved handling ability.

This object is achieved by an electronic device according to the enclosed independent claim 1. Advantageous features of the present invention are defined in the corresponding subclaims.

According to the present invention an electronic device with a first part and a second part connected to each other and foldable onto each other by a hinge comprises a means for detecting the aperture angle between the first part and second part, wherein the detecting means provides an electrical signal according to the aperture angle and a control means controls functions of the electronic device based on the aperture angle signal. Thus, the electronic device according to the present invention comprises a new control element with which a plurality of functions of the device are controllable by varying the aperture angle. Further, new functions can be integrated without providing additional buttons or the like.

Advantageously, the detecting means is a rotational potentiometer connected to the hinge. With the present invention functions like as changing the brightness of the display of the electronic device, controlling a cursor or a scroll function, controlling the zoom or the focus adjusting of a camera built-in in electronic device can be controlled based on said aperture angle signal.

For a better handability the hinge provides a snap-in-function in predetermined angle positions, which gives the user an exact response about the reached angle position.

When the aperture angle is displayed on a display of the electronic device, the electronic device can be used to measure angles. Further, in an foldable electronic device having a motorised hinge, the device can open into favourite angle position automatically. When the electronic device is a clamshell-type mobile phone, functions like rejecting and accepting of an incoming call, activating a video conference mode can be controlled by the aperture angle signal of the mobile phone. The present invention further provides a hinge for a foldable electronic device comprising a rotational potentiometer connected to the hinge.

It should be emphasised that the term "comprises/comprising" when used in this specification is taken to specify the presence of stated features, integers, steps or components but does not preclude the presence or addition of one or more other features, integers, steps, components or groups thereof.

The term "electronic device" includes portable radio communication equipments. The term "portable radio communication equipment", which herein after is referred to as a mobile radio terminal, includes all equipment such as mobile telephones, pagers, communicators, i.e. electronic organisers, smartphones or the like.

### BRIEF DESCRIPITON OF THE DRAWINGS

- Fig. 1: shows a perspective view of a foldable electronic device according to the prior art,
- Fig. 2: shows a front view of a foldable electronic device according to the present invention,
- Fig. 3: shows a side view of the foldable electronic device shown in Fig. 1 in the closed state,
- Fig. 4: shows a side view of the foldable electronic device shown in Fig. 1 in the open state, and
- Fig. 5: shows a block diagram of a foldable electronic device according to the present invention.
- Fig. 6a and 6b: show a front view and a side view, respectively, of a second embodiment of a foldable electronic device according to the present invention, and
- Fig. 7: shows a side view of a third embodiment of a foldable electronic device according to the present invention.

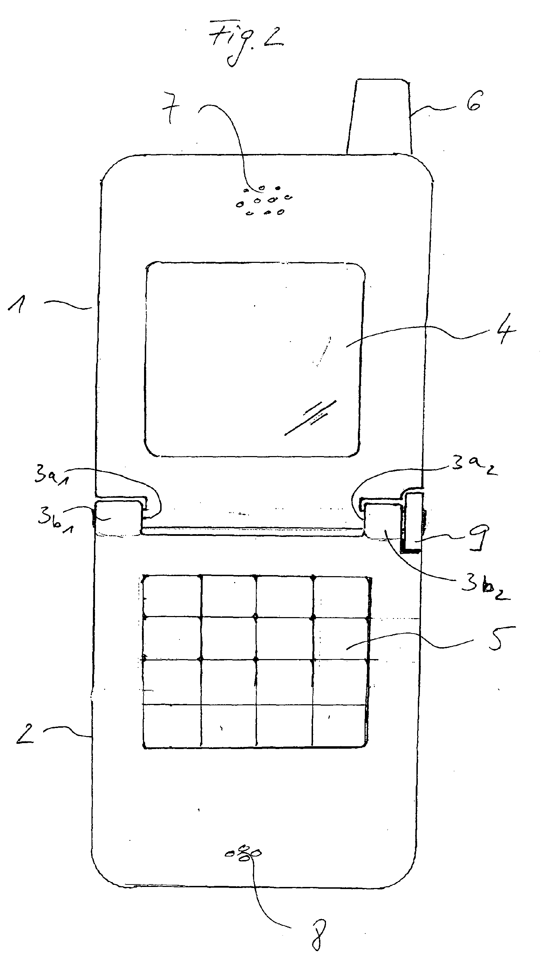

Fig. 2 shows a clamshell-type mobile phone as an example for a foldable electronic device according to the present invention being in its open state. The clamshell-type mobile phone comprises a first part 1 and a second part 2 with approximately the same length. The first part 1 comprises a display 4 on its inner side and the second part 2 comprises a keyboard 5 on its inner side. Further, a loudspeaker 7 and a microphone 8 are built-in in the first part 1 and the second part 2, respectively. An antenna 6 is attached to the first part 1. The first part 1 and the second part 2 of the mobile phone are connected to each other with a pair of hinge devices 3a₁, 3b₁ and 3a₂, 3b₂, wherein a connecting shaft 3a, and a connecting shaft 3a₂ formed on the first part 1 are inserted in the first hinge cylinder 3b₁ and second hinge cylinder 3b₂ formed on the second part 2, respectively. A rotational potentiometer 9 is mounted at the left hinge device 3a₂, 3b₂ such that the potentiometer body remains fixed by second hinge cylinder 3b₂ and only the potentiometer shaft (not shown) mounted on the connecting shaft 3a₂ rotates in line to the connecting shaft 3a₂. In this way, when the clamshell-type mobile phone is opened the rotational potentiometer 9 is driven by the connecting shaft 3a₂ and thus, the resistance of the rotational potentiometer 9 indicates the aperture angle between the first part 1 and the second part 2.

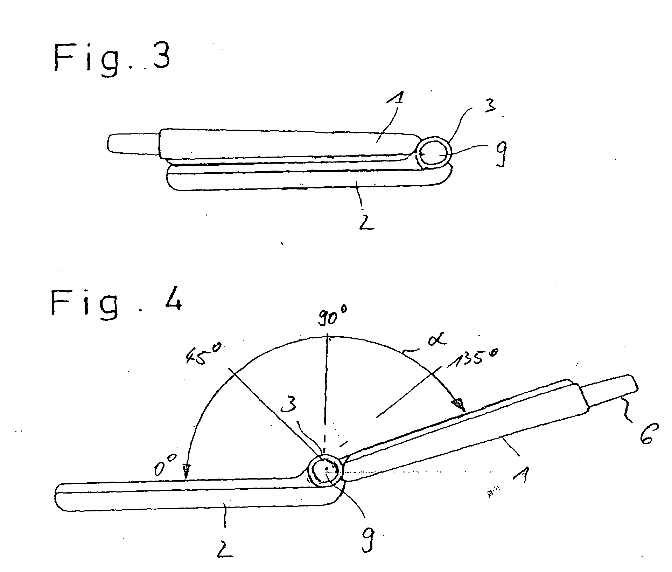

Figs. 3 and 4 show a side view of the clamshell-type mobile phone shown in Fig. 1, wherein the mobile phone shown in Fig. 3 is in the closed state and the mobile phone shown in Fig. 4 is in the open state. The aperture angle α is detected by the rotational potentiometer 9 and a plurality of operations/functions of the clamshell-type mobile phone are carried out depended on the detected the aperture angle α.

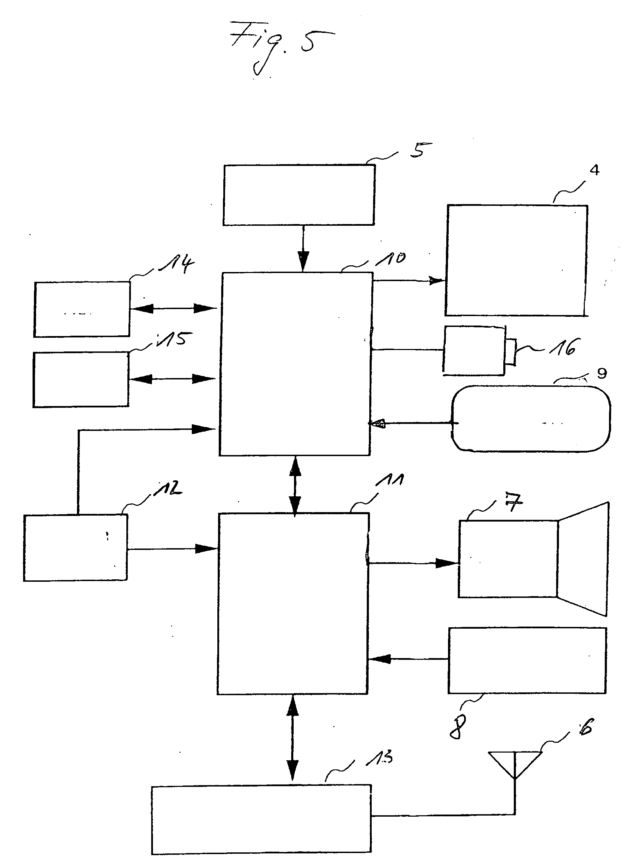

Fig. 5 shows a block diagram of the clamshell-type mobile phone shown in Fig. 1. In the clamshell-type mobile phone, a power source 12 supplies power to a processor 10, and an audio processor 11. The audio processor 11 handles analog data, and performs the input/output control of the loudspeaker 7 and the microphone 8. The radio transmission unit 13 conducts processing related to the radio, such as the highfrequency modulation and demodulation of the mobile telephone. The processor 10 handles digital data and implements functions of the electronic note, word processor, personal computer, etc., and controls the display 4, the input/output of the keyboard 5 and the digital camera 16. Programs executed by the processor 10 are stored in ROM 14, and various rewritable application data is kept in RAM 15. The processor 10 determines the aperture angle α of the clamshell-type mobile phone based on the electrical signal received from the rotational potentiometer 9.

Following, functions of the clamshell-type mobile phone controlled by varying the aperture angle are described. Generally, in the closed state as shown in Fig. 3, i.e., the aperture angle α is 0 degree, the keyboard 5 and the display 4 are switched off, and if the aperture angle α is larger than 45 degree as shown in Fig. 4, the display 4 and the keyboard 5 are activated by the processor 10. Further, in order to prevent destruction, the processor 10 controls the audio processor 11 for outputting a warning signal by the loudspeaker 7 if the maximum aperture angle α is reached.

If an incoming call is received and the user opens the clamshell-type mobile phone (aperture angle α > 0 degree), the processor 10 deactivates the call signal and detects the increase of the aperture angle α. If the clamshell-type mobile phone is opened less than 90 degree and closed again (aperture angle α=0°) the processor 10 rejects the incoming call. Thus, an incoming call can be rejected by slightly opening the clamshell-type mobile phone and close again without pressing any button. On the other hand, if the clamshell-type mobile phone is opened by 90 degree or more, the incoming call is accepted and speech functions are activated by the processor 10.

During the telephone call, when the clamshell-type mobile phone is held against the ear of the user, the display 4 can be switched off to save energy. For example, if during the telephone call the aperture angle α is in the range of 135 degree, the processor 10 switches off the display 4. Further, if the aperture angle α is in the range of 90 degree so that the clamshell-type mobile phone can be placed on a table, the processor 10 activates the video-conference mode, in which the digital camera 16 is activated, the volume of loudspeaker 7 is increased and the microphone characteristics of the microphone 8 is set to wide.

The angles given above for triggering the functions are not fixed, they could be preset values, which can also be changed in a setup menu by the user. Independendly, it can be advantageous for a better handability to provide the hinge 3 with a snap-in-function in for example 45, 90 and 135 degree positions. This gives the user a feedback response about the reached angle position.

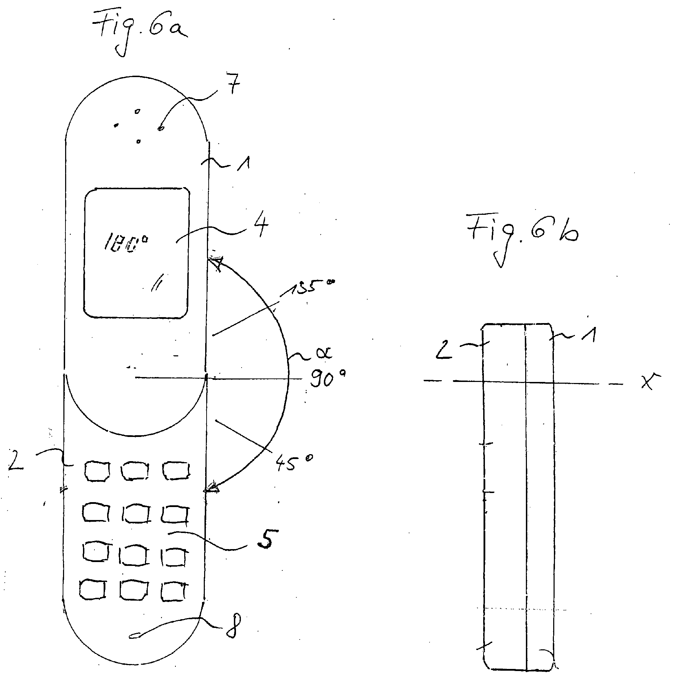

Fig. 6a shows a front view and Fig. 6b a side view of a second embodiment of a clamshell-type mobile phone according to the present invention, wherein the mobile phone shown in Fig. 6a is in the open state (α=180°) and the mobile phone shown in Fig. 6b in the closed state (α=0°). The first part 1 and the second part 2 of the mobile phone are connected to each other with a hinge (not shown) having an axis x so that the first part 1 and the second part 2 can be twisted against each other as shown in Fig. 6b. A rotational potentiometer is connected to the hinge (not shown) for detecting the aperture angle α. The maximum aperture angle α of the clamshell-type mobile phone shown in Figs. 6a and 6b is approximate 360 degrees. The clamshell-type mobile phone comprises an angle measuring function for measuring an angle for instance of an object, wherein the first and second part are held against the object. For this, the user activates the angle measuring function, the actual aperture angle α is detected and displayed on the display 4 as shown in Fig. 6a.

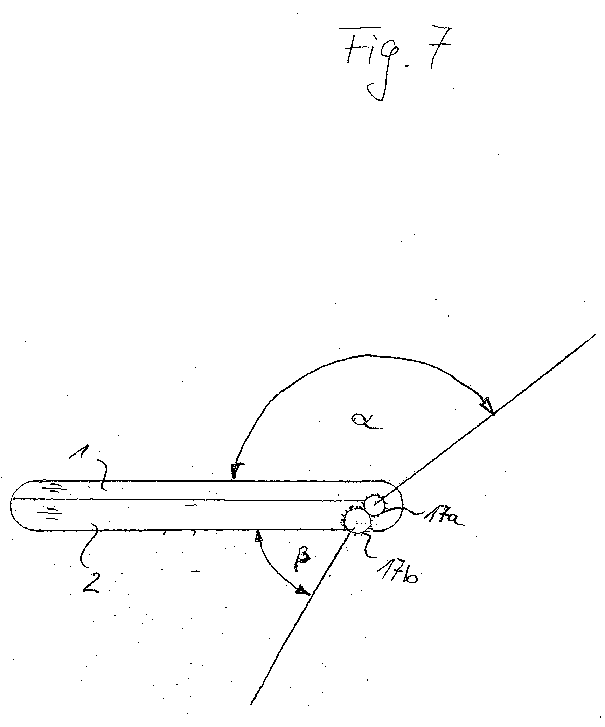

The clamshell-type mobile phone shown in Fig. 7 comprises a gearing 17a, 17b, which connects the rotational potentiometer with the hinge (not show), wherein the small gearwheel 17a is mounted at the hinge device and the larger gearwheel 17b is mounted at the potentiometer shaft (not shown). Thus, if the clamshell-type mobile phone is opened to an angle α, the gearwheel 17b is driven by the gearwheel 17a and the rotational potentiometer 9 revolves by an angle β which is smaller than the aperture angle α. In this way, when the maximum aperture angle α is 360°, a rotational potentiometer having a range smaller than 360° can be used.

According to an embodiment of the present invention a cursor or a scroll function of the clamshell-type mobile phone can be controlled by the signal of the rotational potentiometer 9 so that the cursor is moved up/down or is moved to the right/left according to the change of the aperture angle α by the user. Further, in a video game device or a personal digital assistants (PDA), the signal of the rotational potentiometer 9 can be used to the control of games.

In an foldable electronic device comprising a video camera, the signal of the rotational potentiometer 9 can be used to the control of the zoom function of the video camera by changing the aperture angle α by the user. Further, in an foldable electronic device having a motorised hinge, the device can open into favourite angle position automatically, wherein the actual aperture angle α is detected via the rotational potentiometer 9 and the motor is stopped as soon as the desired angle position is reached.

In an foldable electronic device the brightness of the display 4 can be controlled by the aperture angle α, wherein the brightness of the display 4 is increased from, for example, 0 to 100% according to the enlargement of the aperture angle from 0 to 90 degree.

## Claims

1. An electronic device with a first part (1) and a second part (2) connected to each other and foldable onto each other by a hinge (3) comprising
a means (9) for detecting the aperture angle (α) between said first part (1) and second part (2), wherein said detecting means (9) provides an electrical signal according to the aperture angle (α); and
a control means (10) for controlling functions of said electronic device based on said aperture angle signal.

2. An electronic device according to claim 1, wherein
said detecting means (9) is a rotational potentiometer connected to said hinge (3).

3. An electronic device according to claim 1 or 2, wherein
the electronic device comprises a display (4) and said control means (10) controls the position of a cursor displayed on said display (4) based on said aperture angle signal.

4. An electronic device according to any one of the claims 1 to 3, wherein
the electronic device comprises a camera (16) and said control means (10) controls the zoom or the focus adjusting of said camera (16) based on said aperture angle signal.

5. An electronic device according to any one of the claims 1 to 4, wherein
the electronic device comprises a display (4) and said control means (10) controls the brightness of the display (4) based on said aperture angle signal.

6. An electronic device according to any one of the claims 1 to 5, wherein
said hinge (3) is provided with a snap-in-function in predetermined angle positions.

7. An electronic device according to any one of the claims 1 to 6, wherein
the electronic device comprises a drive for opening the first part (1) and said control means (10) stops the drive if predetermined aperture angle (α) is reached.

8. An electronic device according to any one of the claims 1 to 7, wherein
the electronic device comprises a display (4) and said control means (10) displays the actual aperture angle (α) between the first (1) and second part (2) on the display (4).

9. An electronic device according to any one of the claims 1 to 8, wherein
the electronic device is a clamshell-type mobile phone.

10. An electronic device according to claim 9, wherein
during a telephone call, if the first (1) and second (2) part are opened according to a first aperture angle (α), said control means (10) switched off the display (4).

11. An electronic device according to claim 9 or 10, wherein
during a telephone call, if the first (1) and second (2) part are opened according to a second aperture angle (α), said control means (10) activates the conference mode, wherein the volume of the loudspeaker (7) of the clamshell-type mobile phone is increased.

12. An electronic device according to any one of the claims 1 to 8, wherein
the electronic device is a portable word processor.

13. A hinge (3) for a foldable electronic device comprising:
a rotational potentiometer connected to said hinge (3).

14. A hinge (3) according to claim 13, wherein
said hinge (3) is provided with a snap-in-function in predetermined angle positions.
